# EUROPÄISCHE PATENTSCHRIFT

(11) **EP 1 010 052 B1**
(45) Veröffentlichungstag und Bekanntmachung des Hinweises auf die Patenterteilung: **12.03.2003**
(21) Anmeldenummer: 98952509.2
(22) Anmeldetag: 27.08.1998
(51) Int. Cl.: G06F 1/00

(54) **VERFAHREN ZUR STEUERUNG DER VERTEILUNG UND NUTZUNG VON SOFTWARE-OBJEKTEN BEI VERNETZTEN RECHNERN**
METHOD FOR CONTROLLING DISTRIBUTION AND USE OF SOFTWARE PRODUCTS WITH NETWORK-CONNECTED COMPUTERS
PROCEDE DE COMMANDE DE DISTRIBUTION ET D'UTILISATION DE PRODUITS LOGICIELS DANS LE CAS D'ORDINATEURS RELIES AU RESEAU

(30) Priorität: 02.09.1997 DE 19738325
(43) Veröffentlichungstag der Anmeldung: 21.06.2000
(73) Patentinhaber: SIEMENS AKTIENGESELLSCHAFT, 80333 München (DE)
(72) Erfinder: WIEHLER, Gerhard, D-82223 Eichenau (DE)
(86) Internationale Anmeldenummer: DE9802517
(87) Internationale Veröffentlichungsnummer: WO99012088

(56) Entgegenhaltungen:
- EP-A- 0 421 409
- WO-A-95/05050

## Beschreibung

Die Erfindung betrifft ein Verfahren für Datennetze, bei denen Datensammlungen oder Programme als Software-Objekte an zentraler Stelle verwaltet und auf Anforderung von mit dem Datennetz gekoppelten Rechnern über das Datennetz vorübergehend dem jeweils anfordernden Rechner zur Nutzung zur Verfügung gestellt werden, wobei die Nutzung an den Nutzern zugeteilte Berechtigungen gekoppelt ist.

Über Datennetze können Datenbänke angesteuert und dortige Datensammlungen abgefragt werden. Auch Programme können über Datentnetze den angeschlossenen Rechnern auf Anforderung zur Verfügung gestellt werden. In beiden Fällen bietet die zentrale Verwaltung derartiger Software-Objekte den Vorteil, daß immer der neueste Informationsstand oder die neueste Programmversion verfügbar ist. Ein entsprechendes Verfahren ist bereits aus der Patentanmeldung WO 99/12088 bekannt. Der Zugriff ist meistens an entsprechende Berechtigungen gebunden, die mit Bezug auf die einzelnen Software-Objekte sehr unterschiedlich sein können. Auch sind für die Nutzung der Software-Objekte vielfach Gebühren zu entrichten, so daß eine Erfassung des Nutzungsumfanges notwendig ist.

Aufgabe der Erfindung ist es, die in Verbindung mit einer zentralen Verwaltung von Software-Objekten gegebenen Probleme der Zugangsberechtigung und der Nutzungserfassung günstig zu lösen und dabei im gesamten Datennetz eine einheitliche und flexibel anpaßbare Verteilung und Nutzung zu ermöglichen, die den verschiedensten Anforderungen gerecht wird.

Ausgangspunkt für eine derartige Lösung ist das durch die Merkmale des Patentanspruches 1 gekennzeichnete Verfahren. Danach wird der Zugang zu den Software-Objekten durch zentral erstellte, benutzerspezifische Zertifikate in Verbindung mit einem gesonderten Steuerprogramm geregelt. Durch die damit gegebene zentrale Verwaltung der Nutzungsrechte kann sehr flexibel auf Änderungen von Zugriffsrechten der Nutzer reagiert und netzweit ein einheitlicher Verteilungsmechanismus verwendet werden.

Die Zertifikate und das gesonderte Steuerprogramm eröffnen außerdem die Möglichkeit, weitere Funktionen in einheitlicher Weise zu realisieren, indem diese durch weitere Steuerparameter bzw. entsprechende Programmfunktionen ergänzt werden. So kann entsprechend einer Weiterbildung während eines Programmlaufs ein weiteres Software-Objekt automatisch angefordert und nachgeladen werden, wenn sich eines der vorliegenden Zertifikate auf dieses weitere Software-Objekt bezieht.

Weiterhin in einfacher Weise durch das ergänzte gesonderte Steuerprogramm die Erfassung des Nutzungsumfanges abhängig von entsprechenden Angaben im Zertifikat gesteuert werden, wobei verschiedene Möglichkeiten der Erfassung gegeben sind.

Eine weitere vorteilhafte Ausgestaltung ergibt sich durch die Meldung der Daten über die Nutzungserfassung an eine zentrale Verwaltungsinstanz im Netz, so daß jederzeit Auskunft über die eingesetzten Software-Objekte und deren Nutzungsumfang gegeben werden kann. Der Zeitpunkt und der Umfang der Meldung kann unterschiedlich so gestaltet werden, daß die Rückmeldung nach Ablauf der Gültigkeitsdauer eines Zertifikats erfolgt und die zu diesem gehörigen objektbezogenen Erfassungsdaten umfaßt oder die Rückmeldung nach Ablauf der Gültigkeitsdauer für das gesonderte Steuerprogramm erfolgt und alle vorliegenden Erfassungsdaten umfaßt.

Das Verfahren kann auch auf Netze mit mehreren eigenständigen Verwaltungsinstanzen für Software-Objekte ausgedehnt werden.

Ein weiterer Vorteil besteht darin, daß das Verfahren mit verschiedenen Sicherheitsstandards arbeiten kann. Zweckmäßig ist es, wenn alle Verbindungsherstellungen im Datennetz und Übertragungen durch Schlüssel gesichert erfolgen, die zweckmäßig auf einer benutzerbezogenen Chipkarte gespeichert sind. Die Verwendung einer Chipkarte als Datenträger bindet den Nutzer auch nicht an einen lokalen Arbeitsplatz, er kann vielmehr von jedem Rechner im Netz aus tätig werden. Dabei wird die Chipkarte zweckmäßig auch für die Erfassung der Daten über den Nutzungsumfang verwendet.

Weiterhin kann der Kopierschutz von Software-Objekten in einfacher Weise durch entsprechende Ergänzung der zugehörigen Zertifikate und des gesonderten Steuerprogramms sichergestellt werden.

Weiterhin kann der das Steuerprogramm überprüfen, ob angeforderte Software-Objekte bereits auf dem anfordernden Rechner verfügbar ist und bei positivem Ergebnis die lokale Bereitstellung des Software-Objektes veranlassen. Die mehrmalige Übertragung des Software-Objekte zum Rechner kann so unterbleiben und die Performance erhöht werden.

Insgesamt ermöglicht die Erfindung bei zentraler Softwareund Rechte-Verwaltung eine dezentrale Software-Nutzung. Sie basiert auf Technologien, welche skalierbare Sicherheit gewährleisten und höchste Sicherheitsanforderungen erfüllen können. Auch löst die Erfindung die Verteilung und Nutzungserfassung gültiger Software-Versionen sowie die Löschung nicht mehr benötigter Versionen weitgehend automatisch. Eine Auskunft über die eingesetzten Software-Objekte sowie über ihre Nutzung ist jederzeit möglich. Eine netzweite Erfassung der Daten über den Nutzungsumfang kann periodisch durchgeführt werden und ist parametrisierbar, z. B. monatlich. Nutzer können Software auf beliebige am Netz angeschlossene Rechner laden und anwenden. Eine zentrale Verwaltung ermöglicht die netzweite Einhaltung von Verteilungs- und Nutzungsregeln. Gleichwohl kann dem Nutzer die Freiheit gewährt werden, Einstellungen entsprechend der individuellen Gegebenheiten seines Arbeitsplatzes vorzunehmen.

Einzelheiten der Erfindung seien nachfolgend anhand eines in der Zeichnung dargestellten Ausführungsbeispiels näher erläutert. Im einzelnen zeigen
- FIG 1: ein Übersichtsschema der für die Durchführung des Verfahrens gemäß der Erfindung benötigten Netzwerk- komponenten,
- FIG 2: eine schematische Darstellung einer mit verschiedenen Schlüsseln und Programmen geladenen Chipkarte und
- FIG 3: ein Ablaufdiagramm des Verfahrens gemäß derErfindung.

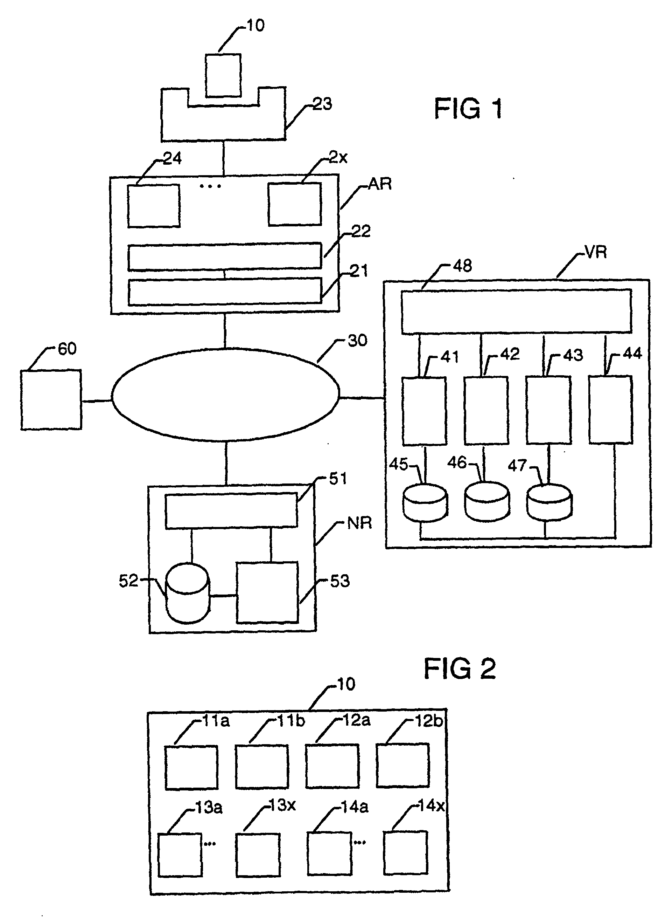

FIG 1 zeigt ein Netzwerk mit beispielsweise einem von mehreren Arbeitsplatzrechnern AR, der zur Nutzung aus dem Netz geladener Software verwendet wird, einer Chipkarte 10, die ein Nutzer zur Authentisierung und zum Nachweis entsprechender Software-Nutzungsberechtigungen verwendet, einem zentralen Verwaltungsrechner VR, auf dem sämtliche Software-Objekte und Software-Nutzungsberechtigungen administriert werden, und einem beliebigen Netzrechner NR , auf dem Software-Objekte gespeichert sind, die bei Anforderung auf den Arbeitsplatzrechner AR geladen werden können. Die Rechner sind über ein übliches Datenkommunikationsnetz 30 - zweckmäßigerweise über ein Internet oder Intranet - miteinander verbunden. Verwaltungsrechner VR und Netzrechner NR sind zwar logisch getrennt dargestellt, sie können aber auf derselben Hardwareplattform installiert sein.

Der Verwaltungsrechner VR enthält z. B. ein Software-Administrationsprogramm 41, im folgenden SOA-Programm genannt, ein Programm zur Erfassung der Software-Nutzungsdaten 42, im folgenden SUC-Programm genannt, ein Programm zur Administration der Software Nutzungsrechte sämtlicher Nutzer im Netz 43, im folgenden USAR-Programm genannt, und ein Programm zur Ausstellung von Zertifikaten zum Zwecke der Software-Nutzung 44, im folgenden ISC-Programm genannt.

Das SOA-Programm 41 kann auf existierenden Produkten, z. B. SMS von Microsoft, basieren, die aber gegebenenfalls erweitert werden müssen. Es administriert eine Datenbank 45 der im Netz verfügbaren Software-Objekte. In der Software-Objekt-Datenbank werden relevante Informationen und Eigenschaften der einzelnen Objekte geführt ,z. B. Hersteller, Versions-Nr., Größe, Location im Netz, Kopierschutz,usw. In dieser oder in einer separaten Datenbank wird je Objekt ein Rollenkennzeichen geführt, das angibt, welchen Rollen im Unternehmen Zugriff auf das jeweilige Software-Objekt erlaubt ist. Typische Rollen im Unternehmen können z. B. sein: Software-Engineer, Marketing-Direktor, Executive-Manager. Der Inhalt der Software-Objekt-Datenbank kann z. B. nach den Spezifikationen des Security Modells von Microsoft vorgenommen werden.

Das SUC-Programm 42 führt in einer Datenbank 46 dynamisch die Software-Nutzungsdaten, d.h. den aktuellen Stand der auf allen Arbeitsplatzrechnern AR genutzten Software. Aktuelle Daten können hier jederzeit abgefragt werden.

Mittels des USAR-Programms 43 werden in einer Datenbank 47 die relevanten Rollen sowie die Zuordnung zu sämtlichen Nutzern im Netz definiert und verwaltet. Jedem Nutzer können eine oder mehrere Rollen zugewiesen werden. Die Anzahl der Rollen ist beliebig erweiterbar.

Das ISC-Programm 44 stellt den Nutzern auf Anforderung sogenannte "User Software Certificates" USC zur Verfügung, durch welche die Berechtigung zur Nutzung von Software erteilt wird. Zur Ausstellung der Zertifikate USC benötigt das ISC-Programm 44 Zugriff auf die Datenbänke 47 und 45.

Die Kommunikation zwischen dem Verwaltungsrechner VR und den Arbeitsplatzrechnern erfolgt zweckmäßigerweise über einen WWW-fähigen Server 48, z. B. Microsofts Internet Information Server oder Netscape's Internet Server. Die Programme 41, 42, 43, und 44 können beispielsweise als Backend-Applikationen über sogenannte CGI-Scripts angebunden sein.

Das Administrator-Interface zur Administration der SOA- und USAR-Programme 41 und 43 bzw. das Recherche-Interface für das SUC-Programm 42 kann z. B. ein beliebig im Netz lokalisierter Browser 60 sein.

Auf dem Arbeitsplatzrechner AR ist zweckmäßigerweise ein weiterer Browser 21 installiert, welcher die Kommunikation mit den Rechnern VR und NR abwickelt. Die Software-Komponente 22, im folgenden SCV-Programm genannt, wird bei jeder Anfrage des Arbeitsplatzrechners AR auf Zuteilung von Software-Nutzungsrechten zusammen mit einer sogenannten HTML-Page zweckmäßigerweise mittels Protokoll HTTPS, z. B. als ActiveX Control oder als "Plug in", vom Verwaltungsrechner VR zum Arbeitsplatzrechner AR übertragen. Die HTML-Page stellt als Liste ASL am Bildschirm die erlaubten Zugriffsmöglichkeiten auf Netz-Software dar.

Bei einer Download-Anforderung verifiziert das SCV-Programm mittels der Zertifikate USC die Nutzungs-Berechtigung. Das SCV-Programm steuert desweiteren die Erfassung der Software-Nutzungsdaten, z. B. Anzahl der Downloads, Nutzungszeit einer SW, usw..

Die Programme 24 bis 2x sind z. B. Anwendungsprogramme, die der Nutzer aus dem Netz geladen hat und anwendet.

Die Chipkarte 10 wird über einen üblichen, am Arbeitsplatzrechner AR angeschlossenen Chipkartenleser 23 betrieben. Die Karte entspricht zweckmäßigerweise dem Standard 7816. Vorteilhafter ist aus Sicherheitsgründen eine Chipkarte mit Cryptocontroller, wie z. B. SLE 44CR80S von Siemens, da diese für offene Netze, wie z. B. das Internet mit auf Public Key-Basis arbeitenden Sicherheitsmechanismen, besonders geeignet.

Chipkartenanwendungen und Chipkartenleser können z. B. im Arbeitsplatzrechner AR entsprechend den von der "PC/SC Workgroup" festgelegten Spezifikationen und Interfaces, unterstützt werden. Weitere Information dazu sind unter
http://www.smartcardsys.com.
zu finden.

Jeder Nutzer am Netz erhält eine individuelle Chipkarte. Die Chipkarte wird vor Auslieferung an den Nutzer in einem sogenannten Personalisierungsprozeß, z. B. bei einem Kartenhersteller, mit den persönlichen Daten des Nutzers personalisiert. Mindestens müssen, wie FIG 2 zeigt, ein privater Schlüssel 11a und ein Zertifikat des öffentlichen Schlüssels 11b des Nutzers auf die Karte gespeichert (personalisiert) werden. Der private Schlüssel und das Zertifikat des öffentlichen Schlüssels des Nutzers werden z. B. in einem Trust Center erzeugt und auf sicherem Wege der Personalisierungsstelle zur Verfügung gestellt, wo sie dann in üblichen Verfahren auf die Chipkarte gespeichert werden.

Mittels dieses Schlüssel-Zertifikatspaares 11a/11b und eines entsprechenden Paares auf dem Verwaltungsrechner VR kann nach heute üblichen Verfahren, z. B. SSL V3.0, eine beidseitige und sichere Client/Server-Authentisierung durchgeführt werden. Dies ist die Voraussetzung für die sichere Übertragung von Zertifikaten USC, die der Nutzer zur Nutzung von Software benötigt.

Je nach Sicherheitsanforderungen können weitere Schlüssel-Zertifikatspaare 12a/12b - z. B. für einen Intergritätsschutz von Zertifikaten USC oder die sichere Kommunikation zwischen Programmen auf dem Verwaltungsrechner VR und dem Arbeitsrechner AR oder für das Nachladen von Schlüsseln oder Anwendungen auf die Karte über das Netz - auf die Chipkarte personalisiert bzw. im Netzbetrieb nachträglich mittels sicherer Verfahren auf die Chipkarte geladen werden.

Bereits bei der Personalisierung oder ebenfalls im Netzbetrieb werden Applikationsprogramme 13a bis 13x auf die Chipkarte geladen, die der Erfassung der Software-Nutzung, z. B. Anzahl der Downloads oder Zeiterfassung, dienen.

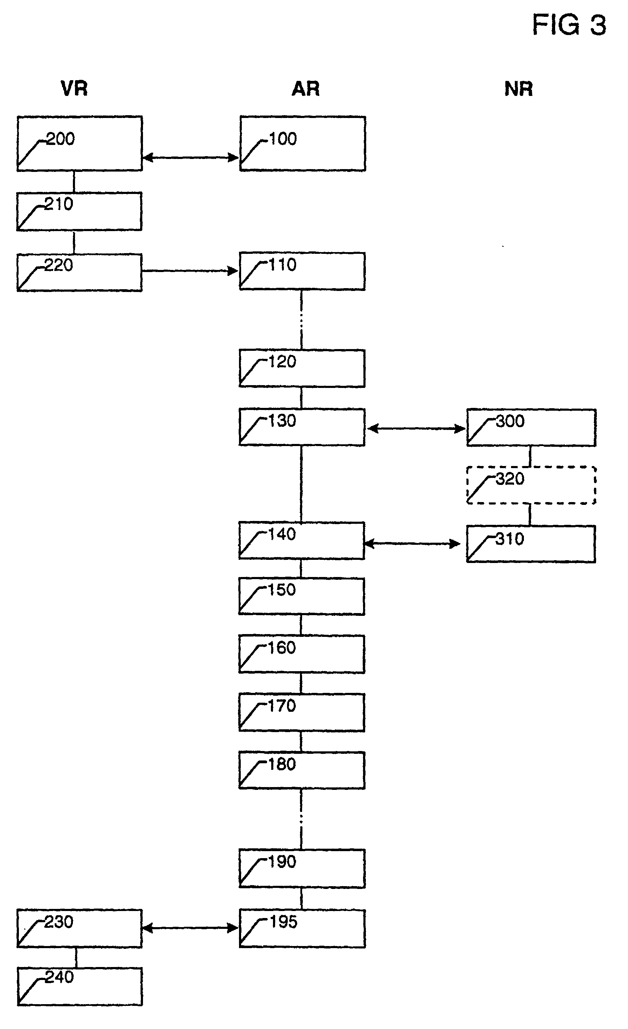

Anhand von FIG 3 wird das Verfahren des Software-Downloads, der Software-Nutzung und der Nutzungserfassung erläutert. Folgende Verfahrensschritte werden dabei ausgeführt:
- 100:: Der Nutzer meldet sich beim Verwaltungsrechner VR an und authentisiert sich mittels des üblichen HTTPS-Protokoll im SSL-Dialog unter Verwendung seines privaten Schlüssels auf der Chipkarte.
- 200:: Der Verwaltungsrechner VR authentisiert sich ebenfalls und identifiziert den Nutzer.
- 210:: Der Verwaltungsrechner VR stellt unter Auswertung der Datenbänke 45 und 47 die Inhalte der nutzerspezifischen Zertifikate USC bereit.Dabei werden Zertifikate für jene Software-Objekte erstellt, deren Rollenkennzeichen mit einer oder mehreren Rollen, die der Nutzer besitzt, übereinstimmt.
Ein Zertifikat USC kann z. B. enthalten: Software-ID, Versions-Nr., Location im Netz, Größe des Software-Objekts, Art der Nutzungserfassung, Zeitintervall der Erfassungsmeldung an den VR, Löschungsmodus, Gültigkeitsdauer des USC, ID des ausstellenden Verwaltungsrechners VR.
Bei der Art der Nutzungserfassung können z. B. folgende Parameter Verwendung finden: Erfassung der Download-Anzahl, Erfassung der aktiven Nutzungszeit, keine Erfas-sung.

- 220:: Die bereitgestellten Zertifikate USC werden mit dem Public Key des Nutzers im Verwaltungsrechner VR integritätsgeschützt, gegebenenfalls auch zusätzlich mit im Internet üblichen Verfahren verschlüsselt,) und eingebunden in die HTML-Page ASL zusammen mit dem SCV-Programm 22 an den Arbeitsplatzrechner AR übertragen.
Da das SCV-Programm im Arbeitsplatzrechner AR sicherheitsrelevante Funktionen ausführt, sollte es zweckmäßig mit einer digitalen Signatur des Verwaltungsrechner VR versehen sein.
- 110:: Im Arbeitsplatzrechner AR erscheint die HTML-Page ASL auf dem Bildschirm. Sie zeigt alle dem Nutzer zugänglichen Software-Objekte an.
Implizit ist eine Gültigkeitsdauer in der HTML-Page enthalten, nach deren Ablauf sich die Page samt des SCV-Programm und der Zertifikate USC zerstören. Für die Dauer der Gültigkeit wird sie im Browser verfügbar gehalten und kann nach jedem Einschalten des Arbeitsplatzrechners AR ohne Kommunikation mit dem Verwaltungsrechner VR aufgerufen werden. Nach jedem Aufruf des SCV-Programms kann vorzugsweise eine Verifikation der digitalen Signatur erfolgen, um Manipulationen zu vermeiden bzw. zu entdecken.
- 120:: Der Nutzer kann nun die zum Download gewünschten Software-Objekte anklicken. Dadurch wird automatisch das SCV-Programm gestartet. Das SCV-Programm und die betreffenden Zertifikate USC werden daraufhin unter Verwendung der auf der Chipkarte befindlichen Schlüssel verifiziert.
- 130:: Nach positiver Verifizierung ermittelt das SCV-Programm die Netzrechner-Adresse(n) aus dem(n) Zertifikaten USC und stellt die WWW-Verbindung zum ersten Netzrechner NR her. (Nach abgeschlossenem Download gegebenenfalls auch zu weiteren Netzrechnern NR.)
- 130/300:: Es erfolgt die gegenseitige Authentisierung zwischen Arbeitsplatzrechner AR und Netzrechner NR entsprechend einem üblichem Verfahren.

- 310/140:: Danach kann das Programm 51 das (die) gewünschte(n) Software-Objekt(e) selektieren und an den Arbeitsplatzrechner AR senden.
- 320:: Zur Erhöhung der Sicherheit, insbesondere bei Anwendung des Verfahrens im Internet, kann es sinnvoll sein, im Netzrechner NR ebenfalls eine Verifizierung der Zertifikate USC mittels des Programms 53 nach üblichen Verfahren vorzunehmen. Beispielsweise werden die Zertifikate USC im Arbeitsplatzrechner AR mit dem Private Key des Nutzers signiert und im Netzrechner NR mit seinem Public Key verifiziert. In diesem Fall würde die Freigabe des angeforderten Software-Objekts aus der Objektdatenbank 52 erst nach positiver Verifikation erfolgen, wie gestrichelt angedeutet.
Eine weitere Erhöhung der Sicherheit kann dadurch erreicht werden, daß das zu übertragende Software-Objekt im Netzrechner NR mit einer digitalen Signatur versehen wird und im Arbeitsplatzrechner AR vor Nutzung eine Verifikation erfolgt. Damit könnte eine Verfälschung des Objektes bei der Netzübertragung entdeckt werden.
- 150:: Im nächsten Schritt stellt auf dem Arbeitsplatzrechner AR das SCV-Programm 22 anhand der USC-Parameter die Art der Nutzungserfassung fest und wird entsprechend tätig. Beispielsweise wird, wenn der Parameter "Erfassung der Anzahl von Downloads" gesetzt ist, eine objektbezogene Zähleranwendung auf der Chipkarte, z. B. 13a in FIG 2, aktiviert und der Zähler erhöht. Zählvorgänge auf der Chipkarte werden zweckmäßig in üblicher Weise kryptographisch abgesichert durchgeführt.
- 160:: Der Nutzer erkennt nach dem Download an Hand der Liste ASL auf dem Bildschirm, welche Software lokal vorhanden ist, und kann den Start per Klick auslösen.
- 170:: Dadurch wird gleichzeitig - falls ein dementsprechender USC-Parameter gesetzt ist - die Nutzungszeiterfassung durch das SCV ausgelöst und die Nutzungszeit während der aktiven Nutzung periodisch erfaßt, indem das SCVProgramm 22 einen objektbezogenen Zeitzähler auf der Chipkarte, z. B. 13b in FIG 2, von Zeit zu Zeit (parametrisierbar) erhöht.
- 180:: Nach Beendigung der Nutzung eines geladenen SoftwareObjektes auf dem Arbeitsplatzrechner AR entscheidet das SCV-Programm 22 anhand des Löschungsmodus-Parameters, ob das Programm gelöscht oder im Arbeitsplatzrechner AR gespeichert wird.
- 190:: Eine Nutzungserfassungs-Rückmeldung an den VR wird entweder durch Ablauf des Zeitintervall-Parameters eines Zertifikats USC oder durch Ablauf eines Zeitintervalls im SCV-Programm 22 ausgelöst. Im Falle der ZertifikatsAuslösung sind nur die zum betreffenden Zertifikat USC gehörenden objektbezogenen Erfassungsdaten betroffen, im SCV-Auslösungsfall die Erfassungsdaten sämtlicher Zertifikate USC. Entsprechend werden die zugehörigen Download-Zähler und Nutzungszeitzähler aus der Chipkarte 10 ausgewählt.
- 195/230:: Nach der üblichen gegenseitigen Authentisierung zwischen Arbeitsplatzrechner AR und Verwaltungsrechner VR werden die ausgewählten Zählerstände an den Verwaltungsrechner VRübertragen.
- 240:: Im Verwaltungsrechner VR werden die entsprechenden Erfassungsdaten mittels des SUC-Programms 42 ausgewertet und in die Datenbank 46 eingetragen.

Bei Ziehen der Chipkarte erscheint z. B. eine Dialogbox mit der Warnung, daß das Programm nach einer bestimmten Zeit (parametrisierbar) gelöscht wird, wenn die Karte nicht wieder eingeführt wird.

Das beschriebene Verfahren ermöglicht durch die zentrale Verwaltung der Nutzungsrechte und Nutzungserfassungsparameter im Verwaltungsrechner VR eine netzweit einheitliche und flexibel anpaßbare Software-Verteilung und -Nutzung. Gleichwohl kann der Nutzer einzelne Parameter ändern oder selbst bestimmen, falls ein entsprechender USC-Parameter diesen Freiheitsgrad erlaubt. Z. B. kann der Nutzer das Löschen oder Speichern eines Programms nach Nutzung selbst entscheiden.

Im Falle der Änderung einzelner USC-Parameter durch den Nutzer bleibt das ursprünglich integritätsgeschützte Zertifikat USC unverändert, wodurch gewährleistet wird, daß bei wiederholten Downloads jeweils eine Integritäts-Verifikation durchgeführt werden kann.

Die Funktionalität kann dadurch erweitert werden, daß ein automatischer Download durch das SCV-Programm 22 für den Fall ausgelöst wird, wenn ein Software-Objekt zur Laufzeit ein anderes Software-Objekt aufruft, z. B. OLE-Technik, das nicht auf dem Arbeitsplatzrechner AR verfügbar ist, dessen Identität aber in einem der Zertifikate USC festgestellt werden kann.

Der Nutzer in einem Netzwerk kann das Verfahren von beliebigen am Netz angeschlossenen Rechnern aus anwenden, wenn er jeweils seine individuelle Berechtigungs- und Erfassungs-Chipkarte an diesem Rechner betreiben kann. Bei einem Rechnerwechsel muß er lediglich vor dem ersten Download eines Software-Objektes mit dem Verwaltungsrechner VR kommunizieren, um sich die aktuellen Rechte entsprechend dem oben beschriebenen Verfahren erteilen zu lassen.

Bei fortschreitender Chipkarten-Technologie kann die HTML-Page mit der Liste ASL und das SCV-Programm auf der Chipkarte gespeichert sein und zum Ablauf gebracht werden. In diesem Fall entfällt bei Rechnerwechsel die Kommunikation mit dem VR.

Aus Sicht des Nutzers läßt sich das Verfahren auch auf verschiedene, voneinander unabhängige Netze anwenden, z. B. Intranet für Rechte innerhalb der eigenen Firma, Extranet für Rechner in einer Partnerfirma, Internet für Rechte zur weltweiten Nutzung. Das kann mit ein und derselben oder mit separaten Chipkarten erfolgen. Bei Verwendung derselben Chipkarte müssen separate Schlüssel für die verschiedenen Verwaltungsrechner VR zur Verfügung stehen.

Eine Erweiterung des Verfahrens ist auch dadurch möglich, daß Mechanismen zum Kopierschutz in das beschriebene Verfahren einbezogen werden. Hierzu wird für Software-Objekte, die kopiergeschützt sein sollen, unter Verwendung des Public Key des Nutzers eine sog. "Key File" erzeugt, die der Nutzer nach dem Download des Software-Objekts erhält. Nur mit dieser "Key File" und unter Verwendung des Private Key des Nutzers kann das Software-Objekt genutzt werden.

Durch Festlegung eines USC-Parameters "kopiergeschützt" und Erweiterung der Funktionen des SCV-Programms für die erforderliche Kommunikation zwischen Arbeitsplatzrechner AR und Verwaltungsrechner NR sowie Arbeitsplatzrechner AR und Chipkarte 10 entsprechend der für den Kopierschutz festgelegten Verfahren, läßt sich der Kopierschutz einfach in das hier erläuterte Verfahren integrieren.

Für das Verfahren können außerdem multifunktionale Chipkarten verwendet werden, die z. B. auch für andere Netzanwendungen eingesetzt werden. Vorzugsweise ist eine Kombination mit Anwendungen zur Identifikation im Netz sinnvoll. Solche Anwendungen könnten z. B. sein: WWW-Client Authentifikation gegenüber einem Internet Server, WWW-Client Identifikation bei Mail (z. B. S/MIME), WWW-Client Identifikation zur Gewährung von Zugriffsrechten auf Netzressourcen.

Das Verfahren kann generell auch - bei geringeren Sicherheitsanforderungen - ohne die Verwendung von Chipkarten angewandt werden. Die auf der Chipkarte befindlichen Schlüssel und Zähler können z. B. auch auf einer Diskette (z. B. mit einem Paßwort verschlüsselt) geführt werden, und die auf der Chipkarte durchgeführten Operationen könnte das SCV-Programm 22 übernehmen.

## Patentansprüche

1. Verfahren zur Steuerung einer Verteilung und Nutzung von als Software-Objekte bezeichneten Datensammlungen oder Programmen an über ein Datennetz (30) miteinander gekoppelte Rechner (AR), wobei die Software-Objekte an zentraler Stelle (NR) im Datennetz (30) verwaltet und auf Anforderung vorübergehend dem jeweils anfordernden Rechner (AR) zur Nutzung zur Verfügung gestellt werden, wobei
- Nutzungsrechte an Software-Objekten in Form von benutzerspezifischen Zertifikaten (USC) ausgebildet sind, die in einer zentralen Verwaltungsinstanz (VR) im Datennetz (30) als Bindeglied zwischen den den einzelnen Benutzern zugeteilten Berechtigungen und den Software-Objekten zugeordneten Berechtigungskennzeichen erstellt werden;
- bei jeder Anfrage eines an der zentralen Verwaltungsinstanz (VR) angemeldeten Rechners (30) nach einem Software-Objekt an die zentrale Verwaltungsinstanz (VR) die Zertifikate (USC) jeweils nutzerbezogen an den anfordernden Rechner (AR) übertragen werden;
- nach einer Auswahl mindestens eines der Zertifikate (USC) das ausgewählte Zertifikat (USC) mittels eines persönlichen Datenträgers (10) verifiziert wird und ein Übermitteln des entsprechenden Software-Objektes von der zentralen Instanz (NR) an den anfordernden Rechner (AR) veranlaßt wird;
- ein gesondertes Steuerprogramm (SCV-Programm 22) im anfordernden Rechnern (AR) auf Basis der Nutzungsrechte die das Software-Objekt betreffenden Aktionen steuert und Statusmeldungen an die zentrale Verwaltungsinstanz (VR) meldet.

2. Verfahren nach Anspruch 1, bei dem das Steuerprogramm (SCV) von der zentralen Stelle (NR) zum anfordernden Rechner (AR) übertragen wird und vor seiner Nutzung mittels des persönlichen Datenträgers (10) verifiziert wird.

3. Verfahren nach einem der Ansprüche 1 oder 2, bei dem die benutzerspezifischen Zertifikate (USC) auf dem als Chipkarte ausgebildeten Datenträger (10) gespeichert werden.

4. Verfahren nach Anspruch 3, bei dem das Steuerprogramm (SCV) im Datenträger (10) residiert und zumindest teilweise dort ausgeführt wird.

5. Verfahren nach einem der Ansprüche 1 bis 4, bei dem der Datenträger (10) mit beliebigen Rechnern (AR) des Datennetz (30) gekoppelt werden kann.

6. Verfahren nach einem der Ansprüche 1 bis 5, bei dem das Steuerprogramm (SCV) überprüft ob angeforderte Software-Objekte bereits auf dem Rechner (AR) verfügbar ist und bei positivem Ergebnis die lokale Bereitstellung des Software-Objektes veranlaßt.

7. Verfahren nach einem der Ansprüche 1 bis 6, bei dem nach Übertragung der Zertifikate (USC) ein Verzeichnis der den Zertifikaten entsprechenden Software-Objekte auf dem Bildschirm des anfordernden Rechners (AR) dargestellt wird und die Anforderung für das jeweils gewünschte Software-Objekt durch den Nutzer ausgelöst wird.

8. Verfahren nach einem der Ansprüche 1 bis 7, bei dem die Bereitstellung der Software-Objekte durch verschiedene Rechner (NR) im Netz (30) erfolgen kann.

9. Verfahren nach einem der Ansprüche 1 bis 8, bei dem in den Zertifikaten (USC) enthaltene Steuerparameter durch den Nutzer änderbar sind, ohne daß ein bestehender Integritätsschutz verloren geht.

10. Verfahren nach einem der Ansprüche 1 bis 9, bei dem ein während der Laufzeit eines Programms als Software-Objekt aufgerufenes weiteres Programm, das in einem der vorliegenden Zertifikate (USC) bezeichnet ist, automatisch durch das gesonderte Steuerprogramm (22) angefordert und daraufhin an den die Anforderung stellenden Rechner (AR) übertragen wird.

11. Verfahren nach einem der Ansprüche 1 bis 10, bei dem die Löschung von Software-Objekten automatisch bei Beendigung ihrer Nutzung erfolgt.

12. Verfahren nach einem der Ansprüche 1 bis 11, bei dem die Zertifikate (USC) Angaben über die Art der Erfassung des Nutzungsumfanges der an einen anfordernden Rechner (AR) übertragenen Software-Objekte enthalten und daß das gesonderte Steuerprogramm (22) auf Grund dieser Angaben die Erfassung des Nutzungsumfanges steuert.

13. Verfahren nach Anspruch 12, bei dem der Nutzungsumfang durch Zählung der übertragenen Software-Objekte erfolgt.

14. Verfahren nach Anspruch 12,
**dadurch gekennzeichnet,**
**daß** der Nutzungsumfang durch Zählung von periodisch wiederkehrenden Taktimpulsen erfolgt.

15. Verfahren nach einem der Ansprüche 12 bis 14, bei dem die Erfassung der Daten über den Nutzungsumfang auf dem Datenträger (10) erfolgt.

16. Verfahren nach einem der Ansprüche 1 bis 15, bei dem in Datennetzen (30) mit mehreren unabhängigen Verwaltungsinstanzen (VR) für Software-Objekte jede Verwaltungsinstanz Nutzungszertifikate (USC) für die zu ihrem Zuständigkeitsbereich gehörenden Software-Objekte erstellt.

17. Verfahren nach einem der Ansprüche 1 bis 16, bei dem alle Verbindungsherstellungen im Datennetz (30) und Übertragungen durch Schlüssel gesichert erfolgen.

18. Verfahren nach Anspruch 17, bei dem die Schlüssel auf dem Datenträger (10) enthalten sind.

19. Verfahren nach einem der Ansprüche 1 bis 18,
**dadurch gekennzeichnet,**
**daß** dem Kopierschutz unterliegende Software-Objekte durch zusätzliche Steuerparameter im zugehörigen Zertifikat (USC) und entsprechende Steuerfunktionen im gesonderten Steuerprogramm (22) gegen ein Kopieren gesichert werden.

## Claims

1. Method for controlling distribution and use of data collections or programs referred to as software objects on computers (AR) which are coupled to one another via a data network (30), where the software objects are managed at a central station (NR) in the data network (30) and, upon request, are temporarily made available for use to the respective requesting computer (AR), where
- use rights for software objects are in the form of user-specific certificates (USC) which are created in a central management entity (VR) in the data network (30) as a link between the authorizations associated with the individual users and authorization identifiers associated with the software objects;
- whenever a computer (30) logged on to the central management entity (VR) makes a request for a software object to the central management entity (VR), the certificates (USC) are transmitted to the requesting computer (AR) on a user-related basis in each case;
- following selection of at least one of the certificates (USC), the selected certificate (USC) is verified using a personal data storage medium (10), and the corresponding software object is transmitted from the central entity (NR) to the requesting computer (AR);
- a separate control program (SCV program 22) on the requesting computer (AR) controls the actions relating to the software object and reports status messages to the central management entity (VR) on the basis of the use rights.

2. Method according to Claim 1, in which the control program (SCV) is transmitted from the central station (NR) to the requesting computer (AR), and before it is used it is verified using the personal data storage medium (10).

3. Method according to one of Claims 1 and 2, in which the user-specific certificates (USC) are stored on the data storage medium (10), which is in the form of a chip card.

4. Method according to Claim 3, in which the control program (SCV) resides on the data storage medium (10) and is executed there at least in part.

5. Method according to one of Claims 1 to 4, in which the data storage medium (10) can be coupled to any computers (AR) in the data network (30).

6. Method according to one of Claims 1 to 5, in which the control program (SCV) checks whether requested software objects are already available on the computer (AR) and, if the result is positive, makes the software object available locally.

7. Method according to one of Claims 1 to 6, in which, following transmission of the certificates (USC), a directory of the software objects corresponding to the certificates is displayed on the screen on the requesting computer (AR), and the user initiates the request for the respective desired software object.

8. Method according to one of Claims 1 to 7, in which the software objects can be made available by various computers (NR) in the network (30).

9. Method according to one of Claims 1 to 8, in which control parameters contained in the certificates (USC) can be changed by the user without existing integrity protection being lost.

10. Method according to one of Claims 1 to 9, in which a further program which is invoked as a software object during a program's run time and is named in one of the available certificates (USC) is automatically requested by the separate control program (22) and is then transmitted to the computer (AR) making the request.

11. Method according to one of Claims 1 to 10, in which software objects are automatically deleted at the end of their use.

12. Method according to one of Claims 1 to 11, in which the certificates (USC) contain details about the type of detection of the scope of use of the software objects transmitted to a requesting computer (AR), and
in that the separate control program (22) controls detection of the scope of use on the basis of these details.

13. Method according to Claim 12, in which the scope of use comes from counting the transmitted software objects.

14. Method according to Claim 12,
**characterized**
**in that** the scope of use comes from counting cyclically recurring clock pulses.

15. Method according to one of Claims 12 to 14, in which the data about the scope of use are captured on the data storage medium (10).

16. Method according to one of Claims 1 to 15, in which, in data networks (30) having a plurality of independent management entities (VR) for software objects, each management entity creates use certificates (USC) for the software objects covered by its area of competence.

17. Method according to one of Claims 1 to 16, in which all connections set up in the data network (30) and transmissions are made under key protection.

18. Method according to Claim 17, in which the keys are held on the data storage medium (10).

19. Method according to one of Claims 1 to 18,
**characterized**
**in that** software objects subject to copy protection are protected from copying by additional control parameters in the associated certificate (USC) and by corresponding control functions in the separate control program (22).

## Revendications

1. Procédé de commande de distribution et d'utilisation de recueils de données ou de programmes définis comme produits logiciels sur des ordinateurs (AR) connectés entre eux par l'intermédiaire d'un réseau de données (30), les produits logiciels étant gérés dans un poste central (NR) dans le réseau de données (3) et étant, sur demande, mis temporairement à la disposition de l'ordinateur respectif demandeur (AR) pour utilisation,
- des droits d'utilisation des produits logiciels étant formés sous la forme de certificats spécifiques à l'utilisateur (USC), ces droits étant créés dans une instance centrale de gestion (VR) dans le réseau de données (30) comme agent de liaison entre les autorisations attribuées à chacun des utilisateurs et les caractéristiques d'autorisation attribuées aux produits logiciels ;
- à chaque demande d'un ordinateur (30) inscrit auprès de l'instance centrale de gestion (VR), les certificats (USC) sont transmis à l'ordinateur demandeur (AR) à chaque fois en fonction de l'utilisateur ;
- après une sélection d'au moins un des certificats (USC), le certificat sélectionné (USC) étant vérifié au moyen d'un support de données personnel (10) et une transmission du produit logiciel correspondant étant ordonnée par l'instance centrale (NR) à l'ordinateur demandeur (AR) ;
- un programme de commande à part (programme SCV 22) dans l'ordinateur demandeur (AR) commandant les actions concernant le produit logiciel sur la base des droits d'utilisation et signalant des messages d'état à l'instance centrale de gestion (VR).

2. Procédé selon la revendication 1, dans lequel le programme de commande (SCV) est transmis du poste central (NR) vers l'ordinateur demandeur (AR) et est vérifié avant son utilisation au moyen du support de données personnel (10).

3. Procédé selon l'une des revendications 1 ou 2, dans lequel les certificats spécifiques à l'utilisateur (USC) sont mémorisés sur le support de données (10) formé comme carte à puce.

4. Procédé selon la revendication 3, dans lequel le programme de commande (SCV) réside dans le support de données (10) et y est exécuté au moins en partie.

5. Procédé selon l'une quelconque des revendications 1 à 4, dans lequel le support de données (10) peut être connecté à n'importe quels ordinateurs (AR) du réseau de données (30).

6. Procédé selon l'une quelconque des revendications 1 à 5, dans lequel le programme de commande (SCV) vérifie si les produits logiciels demandés sont déjà disponibles sur l'ordinateur (AR) et, en cas de résultat positif, ordonne la mise à disposition locale du produit logiciel.

7. Procédé selon l'une quelconque des revendications 1 à 6, dans lequel, après la transmission des certificats (USC), un répertoire des produits logiciels correspondants aux certificats est représenté sur l'écran de l'ordinateur demandeur (AR), et la demande du produit logiciel respectif souhaité est déclenchée par l'utilisateur.

8. Procédé selon l'une quelconque des revendications 1 à 7, dans lequel la mise à disposition des produits logiciels peut être réalisée par différents ordinateurs (NR) du réseau (30).

9. Procédé selon l'une quelconque des revendications 1 à 8, dans lequel les paramètres de commande contenus dans les certificats (USC) sont modifiables par l'utilisateur sans qu'une protection d'intégrité existante ne soit perdue.

10. Procédé selon l'une quelconque des revendications 1 à 9, dans lequel un programme supplémentaire appelé comme produit logiciel pendant le temps de déroulement d'un programme, désigné dans l'un des certificats présents (USC), est demandé automatiquement par le programme de commande à part (22) et est transmis après cela à l'ordinateur (AR) faisant la demande.

11. Procédé selon l'une quelconque des revendications 1 à 10, dans lequel l'effacement de produits logiciels est réalisé automatiquement à la fin de leur utilisation.

12. Procédé selon l'une quelconque des revendications 1 à 11, dans lequel les certificats (USC) contiennent des indications sur le type de saisie du volume d'utilisation des produits logiciels transmis à un ordinateur demandeur (AR) et dans lequel le programme de commande à part (22) commande la saisie du volume d'utilisation en raison de ces indications.

13. Procédé selon la revendication 12, dans lequel le volume d'utilisation est réalisé par le comptage des produits logiciels transmis.

14. Procédé selon la revendication 12,
**caractérisé en ce que**
le volume d'utilisation est réalisé par le comptage d'impulsions de rythme se répétant périodiquement.

15. Procédé selon l'une quelconque des revendications 12 à 14, dans lequel la saisie des données est réalisée par l'intermédiaire du volume d'utilisation sur le support de données (10).

16. Procédé selon l'une quelconque des revendications 1 à 15, dans lequel, dans les réseaux de données ayant plusieurs instances de gestion (VR) autonomes, chaque instance de gestion crée pour les produits logiciels des certificats d'utilisation (USC) pour les produits logiciels appartenant à leur domaine de compétence dans les réseaux de données (30).

17. Procédé selon l'une quelconque des revendications 1 à 16, dans lequel tous les établissements de connexions dans le réseau de données (30) et toutes les transmissions sont réalisés de manière fiable au moyen de clés.

18. Procédé selon la revendication 17, dans lequel les clés sont contenues sur le support de données (10).

19. Procédé selon l'une quelconque des revendications 1 à 18,
**caractérisé en ce que**
les produits logiciels soumis à la protection contre la duplication sont protégés contre la duplication par des paramètres de commande supplémentaires dans le certificat correspondant (USC) et par des fonctions de commande supplémentaires dans le programme de commande à part (22).
